# EUROPEAN PATENT APPLICATION

(11) **EP 4 325 524 A1**
(43) Date of publication of application: **21.02.2024**
(21) Application number: 22788262.8
(22) Date of filing: 04.03.2022
(51) Int. Cl.: G21F 9/06, G21F 9/00

(54) **DEVICE FOR MONITORING DEGRADATION OF WASTEWATER FROM NUCLEAR POWER PLANT DECONTAMINATION, AND OPERATION METHOD THEREOF**

(30) Priority: 15.04.2021 KR 20210048959
(71) Applicant: Korea Hydro & Nuclear Power Co., Ltd, Gyeongju-si, Gyeongsangbuk-do 38120 (KR)
(72) Inventor: KIM, Hak Soo, Sejong-si, Sejong 30146 (KR); KIM, Cho Rong, Daejeon 34014 (KR); KIM, Jeong Ju, Gyeryong-si, Chungcheongnam-do 32806 (KR); CHOI, Jin Soo, Daejeon 34090 (KR); LEE, Kyung Hee, Daejeon 34186 (KR)
(74) Representative: Glawe, Delfs, Moll
(86) International application number: PCT/KR2022/003097
(87) International publication number: WO 2022/220405

(57) **Abstract**

Provided is a device for monitoring degradation of wastewater from nuclear power plant decontamination. The device for monitoring degradation of wastewater from nuclear power plant decontamination comprises a UV reactor connected to a first flow path and for UV-treating introduced wastewater; a wastewater degradation flow path for supplying the wastewater discharged from the UV reactor to the first flow path; a wastewater degradation detecting unit for analyzing components of the wastewater supplied from the wastewater degradation flow path and detecting whether a set condition is satisfied; and a purification flow path for purifying and supplying the wastewater supplied from the UV reactor to the first flow path when the set condition is satisfied.

## Description

This application claims the benefit of Korean Patent Application No. 10-2021-0048959, filed on April 15, 2021, in the Korean Intellectual Property Office, the disclosure of which is incorporated herein by reference in its entirety.

### BACKGROUND

### 1. Field

The present invention relates to a device for monitoring degradation of wastewater from nuclear power plant decontamination and an operating method thereof.

### 2. Description of the Related Art

Wastewater according to nuclear power plant decontamination can be decomposed and purified through filters, UV devices, and ion exchange resins. In this process, in order to confirm the completion of wastewater degradation, samples are taken through sampling at the front and rear ends of the UV device, and then the concentration of organic carbon can be measured using a TOC (Total Organic Carbon) equipment. In the case of sample measurement, as it is directly collected in the field, it may cause concerns about exposure to workers, and there is a problem in that sampling and measurement cannot be performed in real time.

### SUMMARY

The problem to be solved by the present invention is to provide a device for monitoring degradation of wastewater from nuclear power plant decontamination that can reduce worker exposure by reducing the number of samples taken by workers.

In addition, it is to provide a device for monitoring degradation of wastewater capable of checking whether or not wastewater is degraded from nuclear power plant decontamination in real time through a monitoring device.

In addition, it is to provide a device for monitoring degradation of wastewater from nuclear power plant decontamination that can prevent iron precipitation through real-time pH measurement, and can be used for maintenance of a UV reactor through pH confirmation when washing a lamp in a UV reactor.

In addition, it is to provide a device for degradation of wastewater nuclear power plant decontamination that can solve the phenomenon of reducing the wastewater degradation rate by being deposited on the pipes and the outer walls of UV lamps when iron precipitation occurs.

In addition, it is to provide a device for monitoring degradation of wastewater from nuclear power plant decontamination that can visually check how much degradation is progressing through a carbon dioxide monitoring sensor.

The objects of the present invention are not limited to the objects mentioned above, and other objects not mentioned will be clearly understood by those skilled in the art from the description below.

The device for monitoring degradation of wastewater from nuclear power plant decontamination according to one aspect of the present invention for achieving the above object comprises a UV reactor connected to a first flow path and for UV-treating introduced wastewater; a wastewater degradation flow path for supplying the wastewater discharged from the UV reactor to the first flow path; a wastewater degradation detecting unit for analyzing components of the wastewater supplied from the wastewater degradation flow path and detecting whether a set condition is satisfied; and a purification flow path for purifying and supplying the wastewater supplied from the UV reactor to the first flow path when the set condition is satisfied.

In addition, the device further comprises an input-side detecting unit for detecting components of wastewater introduced into the UV reactor; and a discharge-side detecting unit for detecting components of wastewater discharged to the UV reactor and supplied to the wastewater degradation flow path.

In addition, the device further comprises, a buffer tank for receiving wastewater from the UV reactor; and a detecting unit for detecting whether or not carbon dioxide is detected on the buffer tank, wherein the carbon dioxide is generated through the UV-treatment of organic acid in the wastewater, wherein, when it is determined that the carbon dioxide is not detected by the detecting unit, the wastewater on the buffer tank exists in a preset appropriate potential of hydrogen (pH) range, wherein the organic acid in the wastewater of the buffer tank is degraded to a reference value in response to the appropriate potential of hydrogen range.

In addition, wherein the appropriate potential of hydrogen range corresponds to at least a range of 2.7 to 3.0.

In addition, wherein the organic acid is degraded by 90% or more in the wastewater.

In addition, the device further comprises an initial supply flow path for supplying the wastewater supplied from the first flow path to the UV reactor; a depressurizing unit for depressurizing the wastewater supplied from the first flow path on the initial supply flow path and supplying the wastewater to the filtering unit; and a filtering unit for filtering the wastewater supplied from the first flow path on the initial supply flow path.

In addition, the input-side detecting unit, the discharge-side detecting unit, and the wastewater degradation detecting unit measure at least one of the appropriate potential of hydrogen (pH) for the wastewater, but further measure at least one of the oxidation reduction potential (ORP), and electrical conductivity.

In addition, the apparatus further comprises the integrated process monitoring unit for monitoring and analyzing by collecting the detecting information detected by each of the input-side detecting unit, the discharge-side detecting unit, and the wastewater degradation detecting unit.

In addition, the device further comprises a cleaning tank for performing a cleaning operation by circulating and supplying a cleaning solution to the UV reactor, and the cleaning operation may include cleaning of an oxide film and an oil film on a surface of a UV lamp in the UV reactor.

In addition, the UV reactor sets the wastewater inside the UV reactor to an appropriate potential of hydrogen corresponding to a reference value through the cleaning operation, and the cleaning solution may include an inorganic acid including phosphoric acid or nitric acid.

According to the device for monitoring degradation of wastewater and its operating method of the present invention as described above, there are one or more of the following effects.

According to the present invention, it is possible to provide a device for monitoring degradation of wastewater capable of reducing worker exposure by reducing the number of samples taken by workers.

In addition, it is possible to provide a device for monitoring degradation of wastewater capable of checking whether or not the wastewater is degraded in real time through the monitoring device.

In addition, it is possible to provide a device for monitoring degradation of wastewater that can prevent iron precipitation through real-time pH measurement, and can be used for maintenance of the UV reactor by checking the pH when washing the lamp in the UV reactor.

In addition, it is possible to provide a device for monitoring degradation of wastewater that can solve the phenomenon of reducing the wastewater degradation rate by being deposited on the pipe and the outer wall of the UV lamp when iron precipitation occurs.

In addition, it is possible to provide a device for monitoring degradation of wastewater capable of visually checking how much degradation is progressing through a carbon dioxide monitoring sensor.

### BRIEF DESCRIPTION OF THE DRAWINGS

These and/or other aspects will become apparent and more readily appreciated from the following description of the embodiments, taken in conjunction with the accompanying drawings in which:
FIG. 1 is a configuration diagram showing configurations of a device for monitoring degradation of wastewater according to an embodiment of the present invention; and
FIG. 2 is a flowchart sequentially illustrating a method of operating a device for monitoring degradation of wastewater according to an embodiment of the present invention.

### DETAILED DESCRIPTION

Hereinafter, preferred embodiments of the present invention will be described in detail with reference to the accompanying drawings. Advantages and features of the present invention and methods of achieving them will become apparent with reference to the embodiments described below in detail in conjunction with the accompanying drawings. However, the present invention is not limited to the embodiments described below, but may be implemented in various different forms, and these embodiments are provided only for making the description of the present invention complete and fully informing those skilled in the art to which the present invention pertains on the scope of the invention, and the present invention is only defined by the scope of the claims. Like reference numerals refer to like elements throughout.

Hereinafter, embodiments of the present invention will be described in detail with reference to the accompanying drawings. In the description with reference to the accompanying drawings, the same or corresponding components regardless of reference numerals are given the same reference numerals, and duplicate descriptions thereof will be omitted.

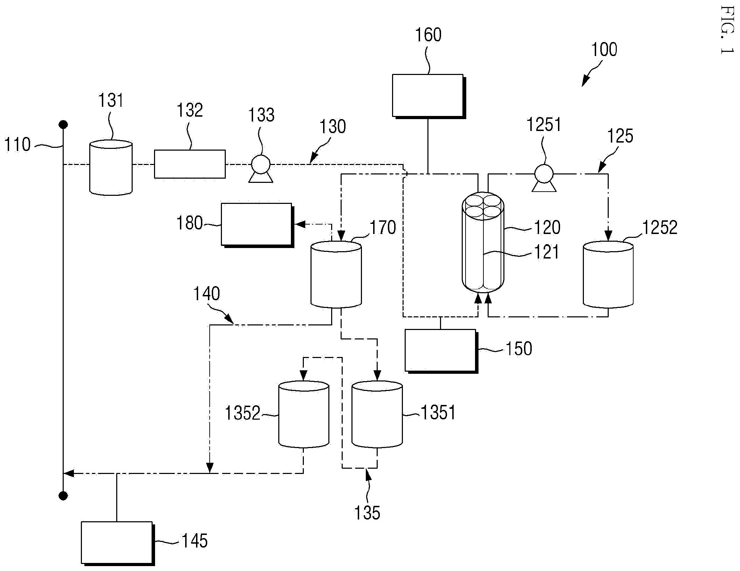

Referring to FIG. 1, the device for monitoring degradation of wastewater 100 according to an embodiment of the present invention may comprise a UV reactor 120, a cleaning tank 1252, an initial supply flow path 130, a depressurizing unit 131, a filtering unit 132, a purification flow path 135, a wastewater degradation flow path 140, a wastewater degradation detecting unit 145, an input-side detecting unit 150, a discharge-side detecting unit 160, a buffer tank 170, a carbon dioxide detecting unit 180 and an integrated process monitoring unit (not shown).

Here, the UV reactor 120 may be connected to the first flow path 110 to UV-treat the introduced wastewater. The wastewater degradation flow path 140 may supply the wastewater discharged from the UV reactor 120 to the first flow path 110.

The wastewater degradation detecting unit 145 may analyze components of the wastewater supplied from the wastewater degradation flow path 140 to detect whether a set condition is satisfied. The purification flow path 135 may purify the wastewater supplied from the UV reactor 120 when the set condition is satisfied.

The purification flow path 135 may supply the purified wastewater to the first flow path 110. The input-side detecting unit 150 may detect components of the wastewater introduced into the UV reactor 120.

The discharge-side detecting unit 160 may detect components of the wastewater discharged to the UV reactor 120 and supplied to the wastewater degradation flow path 140. The buffer tank 170 may receive wastewater from the UV reactor 120.

At this time, the carbon dioxide detecting unit 180 may detect whether or not carbon dioxide (CO2) is detected on the buffer tank 170. Meanwhile, the carbon dioxide may be generated as the organic acid is degraded through the UV treatment of the organic acid in the wastewater.

When it is determined that the carbon dioxide is not detected by the detecting unit 180, it can be assumed that the wastewater in the buffer tank 170 exists in a preset appropriate potential of hydrogen (pH) range.

Here, the organic acid in the wastewater of the buffer tank 170 may be degraded to a reference value corresponding to the appropriate potential of hydrogen (pH) range. The appropriate potential of hydrogen (pH) range may correspond to at least the range of about 2.7 to about 3.0. The organic acid may be degraded by 90% or more in the wastewater.

The initial supply flow path 130 may supply the wastewater supplied from the first flow path 110 to the UV reactor 120. The depressurizing unit 131 may depressurize the wastewater supplied from the first flow path 110 on the initial supply flow path 130. Therefore, the depressurizing unit 131 can prevent damage or failure of the filtering unit 132 from occurring due to the pressure of the wastewater supplied to the filtering unit 132.

The filtering unit 132 may filter the wastewater supplied from the first flow path 110 on the initial supply flow path 130.

On the other hand, the input-side detecting unit 150, the discharge-side detecting unit 160, and the wastewater degradation detecting unit 145 measure at least one of the appropriate potential of hydrogen (pH), oxidation reduction potential (ORP) and electrical conductivity, but it is preferable to necessarily include the appropriate potential of hydrogen and measure it.

The integrated process monitoring unit 190 may collect detecting information detected by each of the input-side detecting unit 150, the discharge-side detecting unit 160, the wastewater degradation detecting unit 145, and the carbon dioxide detecting unit 180. The detecting information collected in this way may be utilized for monitoring and analysis through its own or external means.

The cleaning tank 1252 may circulate and supply a cleaning solution to the UV reactor 120 to perform a cleaning operation. Here, the cleaning operation may include cleaning of an oxide film and an oil film on the surface of the UV lamp 121 on the UV reactor 120.

The UV reactor 120 may set the wastewater inside the UV reactor 120 to an appropriate potential of hydrogen corresponding to a preset reference value through the cleaning operation. The cleaning solution may contain an inorganic acid including phosphoric acid or nitric acid.

The purification flow path 135 may include a first ion exchange unit 1351 for primary ion exchange treatment on the wastewater and a second ion exchange unit 1352 for secondary ion exchange treatment on the wastewater.

Here, the first ion exchange unit 1351 may include a cation exchange resin, and the second ion exchange unit 1352 may include an anion exchange resin.

The first ion exchange unit 1351 and the second ion exchange unit 1352 are for removing metal ions, radioactive substances, and residual organic acids, and may remove metal ions (Fe, Cr, Ni, etc.), radioactive substances, residual organic acids, etc. through ion exchange resins after wastewater degradation treatment is completed or when iron precipitates are generated due to pH increase.

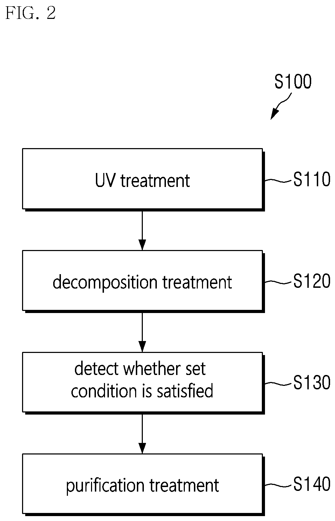

FIG. 2 is a flowchart sequentially illustrating a method of operating a device for monitoring degradation of wastewater according to an embodiment of the present invention.

Referring to FIG. 2, the device for monitoring degradation of wastewater operating method can UV-treat the wastewater introduced from the UV reactor 120 connected to the first flow path 110 in S110.

In S120, the wastewater discharged from the UV reactor 120 in the wastewater degradation flow path 140 may be supplied to the first flow path 110 side.

In S130, the wastewater degradation detecting unit 145 analyzes components of the wastewater supplied from the wastewater degradation flow path 140 to detect whether a set condition is satisfied.

When the set condition is satisfied in the purification flow path 135 in S140, the wastewater supplied from the UV reactor 120 may be purified and supplied to the first flow path 110.

Although the embodiments of the present invention have been described with reference to the above and the accompanying drawings, those skilled in the art, to which the present invention pertains, will understand that the present invention can be practiced in other specific forms without changing the technical spirit or essential features. Therefore, the embodiments described above should be understood as illustrative in all respects and not limiting.

## Claims

1. A device for monitoring degradation of wastewater from nuclear power plant decontamination comprising:
a UV reactor connected to a first flow path and for UV-treating introduced wastewater;
a wastewater degradation flow path for supplying the wastewater discharged from the UV reactor to the first flow path;
a wastewater degradation detecting unit for analyzing components of the wastewater supplied from the wastewater degradation flow path and detecting whether a set condition is satisfied; and
a purification flow path for purifying and supplying the wastewater supplied from the UV reactor to the first flow path when the set condition is satisfied.

2. The device of claim 1 further comprises,
an input-side detecting unit for detecting components of wastewater introduced into the UV reactor;
a discharge-side detecting unit for detecting components of wastewater discharged to the UV reactor and supplied to the wastewater degradation flow path.

3. The device of claim 2 further comprises,
a buffer tank for receiving wastewater from the UV reactor; and
a detecting unit for detecting whether or not carbon dioxide is detected on the buffer tank,
wherein the carbon dioxide is generated through the UV-treatment of organic acid in the wastewater,
wherein, when it is determined that the carbon dioxide is not detected by the detecting unit, the wastewater on the buffer tank exists in a preset appropriate potential of hydrogen (pH) range,
wherein the organic acid in the wastewater of the buffer tank is degraded to a reference value in response to the appropriate potential of hydrogen range.

4. The device of claim 3, wherein the appropriate potential of hydrogen range corresponds to at least a range of 2.7 to 3.0.

5. The device of claim 4, wherein the organic acid is degraded by 90% or more in the wastewater.

6. The device of claim 5 further comprises,
an initial supply flow path for supplying the wastewater supplied from the first flow path to the UV reactor;
a filtering unit for filtering the wastewater supplied from the first flow path on the initial supply flow path; and
a depressurizing unit for depressurizing the wastewater supplied from the first flow path on the initial supply flow path and supplying the wastewater to the filtering unit.

7. A method for operating a device for monitoring degradation of wastewater from nuclear power plant decontamination comprising:
UV-treating wastewater introduced from a UV reactor connected to a first flow path;
degrading the wastewater discharged from the UV reactor in a wastewater degradation flow path to supply the wastewater to the first flow path;
detecting whether a set condition is satisfied by analyzing components of the wastewater supplied from the wastewater degradation flow path in a wastewater degradation detecting unit; and
purifying the wastewater supplied from the UV reactor and supplying it to the first flow path when the set condition is satisfied in a purification flow path.
